# EUROPEAN PATENT SPECIFICATION

(11) **EP 2 025 388 B1**
(45) Date of publication and mention of the grant of the patent: **03.03.2010**
(21) Application number: 07253090.0
(22) Date of filing: 31.07.2007
(51) Int. Cl.: B01D 53/90, B01D 53/94, F01N 3/20, F01N 9/00, F01N 11/00

(54) **System and method for selective catalytic reduction control**
System und Verfahren zur selektiven Steuerung einer katalytischen Reduktion
Système et procédé pour le contrôle sélectif de réduction catalytique

(43) Date of publication of application: 18.02.2009
(73) Proprietor: Delphi Technologies, Inc., Troy, Michigan 48007 (US)
(72) Inventor: Parmentier, Michael, 6747 Chatillon (BE); Schmitt, Julien, 57970 Kuntzig (FR)
(74) Representative: Gregory, John David Charles

(56) References cited:
- WO-A-2005/068797
- DE-A1-102005 012 568
- US-A1- 2004 098 974
- US-A1- 2006 000 202
- US-A1- 2007 137 181

## Description

The present invention relates to control of Selective Catalytic Reduction (SCR) catalyst and particularly, but not exclusively, to control of an SCR catalyst in vehicle engines.

Selective Catalytic Reduction (SCR) catalysts remove nitrogen oxides (NOₓ), often the most abundant and polluting component in exhaust gases, through a chemical reaction between the exhaust gases, a reducing agent, and a catalyst.

The control of Selective Catalytic Reduction (SCR) catalysts consists of injecting an amount of reducing agent, typically urea, also known as carbamide ((NH₂)₂CO), which decomposes to ammonia (NH₃) and carbon dioxide in the presence of water, oxygen and heat. Ammonia then reacts with NOₓ gases to produce nitrogen and water. The amount of reducing agent injected is required to provide the maximum NOₓ conversion efficiency whilst keeping excess NH₃, also known as NH₃ slip, to low values. SCR catalysts have mainly been introduced on heavy duty vehicles where high NOₓ levels are present and where steady state can be considered to be the main operating conditions. In these conditions, SCR control consists of supplying a certain NH₃ to NOₓ ratio, usually mapped as a function of speed and load.

Applying this kind of control on a passenger car, where transient conditions are more frequent, usually requires specific transient corrections. Moreover, vanadium based catalysts are often used on heavy duty vehicles and this technology is known to have a reduced buffering effect (the temporary storage of NH₃) than new Zeolite based catalysts (Fe, Cu) used on passenger car (or light duty) applications.

Another possible way to control an SCR catalyst is to model the chemical behaviour of the catalyst and implement the model in the Engine Control Unit (ECU). This approach requires a high amount of calibration work in order to identify all the parameters that need to be taken into account in a chemical model. The calculation load required for this approach is also very high as it would require to calculate multiple complex chemical reactions occurring in the catalyst in slices along its length. Chemical reactions in the catalyst depend on the temperature of the catalyst and on the concentration of the different compounds, which vary along the length of the catalyst, especially during transients. So to obtain an accurate model of all the reactions in the catalyst, the calculations would require to model several slices in series. Closed-loop control of such a system is usually realised with NOₓ sensors before and after the SCR catalyst, but NOₓ sensors are also sensitive to NH₃ creating additional difficulty that is required to be taken into account by the closed-loop control.

DE 102005012568 discloses a device and method for removing nitrogen oxide from the exhaust of an internal combustion engine. An aggregate containing a reducing agent is added to the exhaust dependent on variables such as engine load, air/fuel ratio and engine revolutions.

According to a first aspect of the present invention there is provided a selective catalytic reduction (SCR) catalyst control system for an engine having an SCR catalyst comprising:
a nitrogen oxides (NOₓ) engine emission determination means for determining a NOₓ engine emission value;
a urea control means enabled to supply a quantity of urea to the SCR catalyst;
a NOₓ efficiency target means, which determines a target value of stored ammonia (NH₃) in the SCR catalyst based on a required NOₓ efficiency and an SCR catalyst temperature determined from an SCR catalyst temperature determination means ;
an SCR catalyst model which determines a value of stored NH₃ in the SCR catalyst based on the NOₓ engine emission value, the SCR catalyst temperature, the quantity of urea supplied to the SCR catalyst and a pre-determined efficiency of conversion of NOₓ gases; and
differential determination means enabled to compare the target value of stored NH₃ and the value of stored NH₃ in the SCR catalyst to determine a stored NH₃ differential,
wherein the urea control means determines the required quantity of urea to supply to the SCR catalyst based on the stored NH₃ differential.

Preferably, the NOₓ ratio calculation means receives a first temperature value from a first temperature sensor and the NOₓ ratio is calculated according to the first temperature value.

Preferably, the first temperature sensor measures oxidation catalyst temperature.

Alternatively, the first temperature sensor measures particulate filter temperature.

Alternatively, the first temperature sensor measures the first temperature value between a particulate filter and an oxidation catalyst

Preferably, the NOₓ engine emission determination means is an engine-out NOₓ model.

Preferably, the engine-out NOₓ model calculates the NOₓ engine emission value based on injected fuel flow into the engine, engine load, Exhaust Gas Recirculation (EGR) rate and ambient temperature.

Alternatively, the NOₓ engine emission determination means is a NOₓ sensor positioned upstream of the SCR catalyst, which provides a NOₓ engine emission value.

Preferably, the NOₓ efficiency target means further utilises values from sensors measuring one or more of the following parameters to determine a target value of stored ammonia (NH₃) in the SCR catalyst: engine speed; engine load; air temperature; coolant temperature; or Diesel Particulate Filter (DPF) regeneration mode.

Preferably, the SCR model determines a NH₃ slip value, which represents the amount of NH₃ exiting the SCR catalyst, by calculating an SCR catalyst capacity based on physical characteristics of the SCR catalyst and the SCR catalyst temperature and taking into account the value of stored NH₃ in the SCR catalyst.

Preferably, the system further comprises NH₃ slip control means and a NOₓ engine emission increasing means, wherein, if it is determined that the NH₃ slip value is above, or is predicted to rise above, a pre-determined value, NOₓ engine emission increasing is directed to increase NOₓ engine emissions, thereby reducing NH₃ slip.

Preferably, the NOₓ engine emission increasing means is a Exhaust Gas Recirculation (EGR) means, wherein NOₓ engine emissions are increased by reducing or stopping the amount of EGR to the engine.

Preferably, the system further comprises an SCR model modification means.

Preferably, the SCR model modification means comprises a NH₃ sensor enabled to measure actual NH₃ slip from the SCR catalyst, actual NH₃ slip averaging means and SCR model NH₃ slip value averaging means, and comparison means enabled to compare outputs from the actual NH₃ slip averaging means and the SCR model NH₃ slip value averaging means and determine an NH₃ slip estimation error, wherein the SCR model is modified by the SCR model modification means according to the NH₃ slip estimation error.

Preferably, the SCR model modification means is enabled to modify the SCR model by altering the pre-determined efficiency of conversion of NOₓ gases based on the NH₃ slip estimation error.

Alternatively or further preferably, the SCR model modification means is enabled to modify the SCR model by altering the SCR catalyst capacity based on the NH₃ slip estimation error.

Preferably, the SCR model modification means modifies the SCR model by altering the SCR catalyst capacity if the SCR catalyst is filled with NH₃ by a pre-determined minimum amount for a predetermined time.

According to a second aspect of the present invention there is provided a method of controlling selective catalytic reduction (SCR) in an engine having an SCR catalyst comprising the steps of:
(i) determining a nitrogen oxides (NOₓ) engine emission value;
(ii) controlling supply of a quantity of urea to the SCR catalyst;
(iii) measuring an SCR catalyst temperature from the SCR catalyst
(iv) determining a stored ammonia (NH₃) target value in the SCR catalyst based on a target NOₓ conversion efficiency and the SCR catalyst temperature;
(v) calculating a NOₓ ratio, being the ratio of nitrogen dioxide in the NOₓ engine emission value;
(vi) calculating a stored NH₃ value in the SCR catalyst using an SCR catalyst model based on the NOₓ engine emission value, the SCR catalyst temperature, the quantity of urea supplied to the SCR catalyst, the NOx ratio and a pre-determined efficiency of conversion of NOₓ gases; and
(vii) comparing the target value of stored NH₃ and the value of stored NH₃ in the SCR catalyst to determine a stored NH₃ differential,
wherein step (ii) controls the supply of the required quantity of urea to the SCR catalyst based on the stored NH₃ differential.

Preferably the step of calculating a NOₓ ratio comprises measuring a first temperature value from a first temperature sensor and calculating the NOₓ ratio according to the first temperature value.
Preferably, the first temperature value is an oxidation catalyst temperature value.

Alternatively, the first temperature value is a particulate filter temperature.

Further alternatively, the first temperature value is measured between a particulate filter and an oxidation catalyst.

Preferably, step (i) comprises calculating the (NOₓ) engine emission value based on an engine-out NOₓ model.

Preferably, the step of calculating the (NOₓ) engine emission value takes injected fuel flow into the engine, engine load, Exhaust Gas Recirculation (EGR) rate and ambient temperature into account in the engine-out NOₓ model.

Alternatively, step (i) comprises measuring a NOₓ engine emission value from a NOₓ sensor positioned upstream of the SCR catalyst.

Preferably, step (iv) further comprises measuring one or more of the following parameters to determine a target value of stored ammonia (NH₃) in the SCR catalyst: engine speed; engine load; air temperature; coolant temperature; or Diesel Particulate Filter (DPF) regeneration mode.

Preferably, step (vi) further comprises determining a NH₃ slip value, which represents the amount of NH₃ exiting the SCR catalyst, by calculating, within the SCR model, an SCR catalyst capacity based on physical characteristics of the SCR catalyst and the SCR catalyst temperature and taking into account the value of stored NH₃ in the SCR catalyst.

Preferably, the method further comprises the steps of controlling NH₃ slip and increasing NOₓ engine emissions, wherein, if it is determined that the NH₃ slip value is above, or is predicted to rise above, a pre-determined value, NOₓ engine emissions are increased, thereby reducing NH₃ slip.

Preferably, the step of increasing NOₓ engine emissions comprises reducing or stopping the amount of Exhaust Gas Recirculation (EGR) to the engine.

Preferably, the method further comprises modifying the SCR model used in step (v).

Preferably, the step of modifying the SCR model comprises measuring actual NH₃ slip from the SCR catalyst using an NH₃ sensor, calculating the SCR model NH₃ slip from the SCR model, averaging the actual NH₃ slip over a pre-determined time and averaging SCR model NH₃ slip over the same pre-determined time, comparing the averaged actual NH₃ slip and the averaged SCR model NH₃ slip and determining an NH₃ slip estimation error, wherein the SCR model is subsequently modified according to the NH₃ slip estimation error.

Preferably, the step of modifying the SCR model modifies the SCR model by altering the pre-determined efficiency of conversion of NOₓ gases based on the NH₃ slip estimation error.

Alternatively or further preferably, the step of modifying the SCR model modifies the SCR model by altering the SCR catalyst capacity based on the NH₃ slip estimation error.

Preferably, the step of modifying the SCR model modifies the SCR model by altering the SCR catalyst capacity if the SCR catalyst is filled with NH₃ by a pre-determined minimum amount for a predetermined time.

According to a third aspect of the present invention there is provided a Diesel engine incorporating a selective catalytic reduction (SCR) catalyst control system according to the first aspect of the present invention.

Embodiments of the present invention will now be described, by way of example only, with reference to the drawings, in which:
Fig. 1 is a graph of measured and modelled NOₓ emissions;
Fig. 2 shows a flow diagram of an open loop control structure for a Selective Catalytic Reduction (SCR) catalyst;
Fig. 3 is a graph showing NOₓ efficiency against stored NH₃;
Fig. 4 is a graph showing variations in NH₃ slip depending on control of NOₓ emissions;
Fig. 5 is a flow diagram of an open loop control structure for a Selective Catalytic Reduction catalyst with an additional closed loop control section; and
Fig. 6 is a graph showing a temperature transient showing modelled NH₃ outflow from the catalyst, measures NH₃ concentration from a sensor and temperature of gases at the SCR inlet.

As explained above, the engine-out NOₓ flow needs to be known to inject the correct amount of urea, as too little gives poor efficiency and too much gives NH3 slip. Prior art systems use a NOₓ sensor located upstream of the SCR catalyst.

The present invention uses simplified models to calculate the NOₓ conversion efficiency of the SCR catalyst and drive the injection quantity of urea required to maintain this efficiency to a certain level. The model can take into account several key parameters including:
total NOₓ flow entering the SCR catalyst and NO₂/NOₓ ratio;
SCR catalyst temperature; and
stored NH3 in the SCR catalyst.

The total NOₓ flow can be measured by a NOₓ sensor located before the SCR.

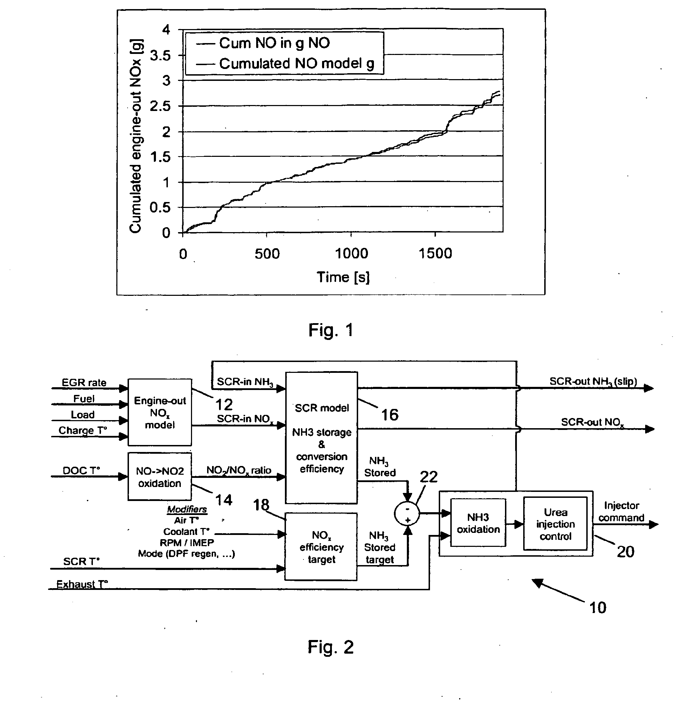

Alternatively, as used in a preferable embodiment on the present invention, a NOₓ model can be used that replaces the NOₓ sensor. The NOₓ flow is modelled as a fraction of injected fuel flow. This fraction is mapped as a function of engine load (IMEP - Indicated Mean Effective Pressure), corrected for inert EGR (Exhaust Gas Recirculation) rate and ambient temperature. Fig. 1 shows the comparison between modelled and measured NOₓ using a US city cycle for passenger cars called FTP75 or EPA III.

Referring now to Fig. 2, an open loop model for selective catalytic reduction control 10 in an exhaust system of an engine comprises an engine-out NOₓ model 12, a NO₂/NOₓ ratio model 14, an SCR model 16, which models storage of NH₃ and NOₓ conversion efficiency, a NOₓ efficiency target model 18 and an urea injection control 20.

The engine-out NOₓ model 12, as described above, uses injected fuel flow to calculate the NOₓ emission taking into account engine load, EGR rate and ambient temperature.

The NO₂/NOₓ ratio model 14, calculates a NO₂/NOₓ ratio based on a temperature measurement from an oxidation catalyst in the exhaust system. Although, the temperature measurement may come from an alternative position in the exhaust system. In particular, the temperature could be measured between the oxidation catalyst and a particulate filter or even after the particulate filter. Furthermore, a particulate filter can effect the NO₂/NOₓ ratio and therefore can be taken into consideration in the NO₂/NOₓ ratio model 14.

The SCR model 16 calculates the NOₓ conversion efficiency of an SCR in the exhaust system based on a function of stored NH₃ in the SCR, the amount of injected urea from the urea injection control 20, and temperature. This efficiency can then be corrected for the NO₂/NOₓ ratio obtained from the NOₓ ratio model 14. When the NOₓ conversion efficiency is known, the amount of NH₃ used for NOₓ reduction can be calculated based on a pre-determined amount of NH₃ being required to reduce a pre-determined amount of NOₓ and, as such the amount of stored NH₃ is calculated, along with any excess NH₃ (NH₃ slip) or any output of NOₓ gases. Since the storage capacity of an SCR catalyst decreases with temperature, if the SCR temperature increases too quickly, a quantity of stored NH₃ will be released. The maximum storage capacity for NH₃ of the SCR catalyst is calculated as a function of SCR temperature. Therefore, NH₃ leaving the SCR (NH₃ slip) is also an output of the SCR model 16. This provides a means to compare the SCR model 16 to a NH₃ sensor located downstream of the SCR catalyst (discussed in more detail below with respect to closed loop control).

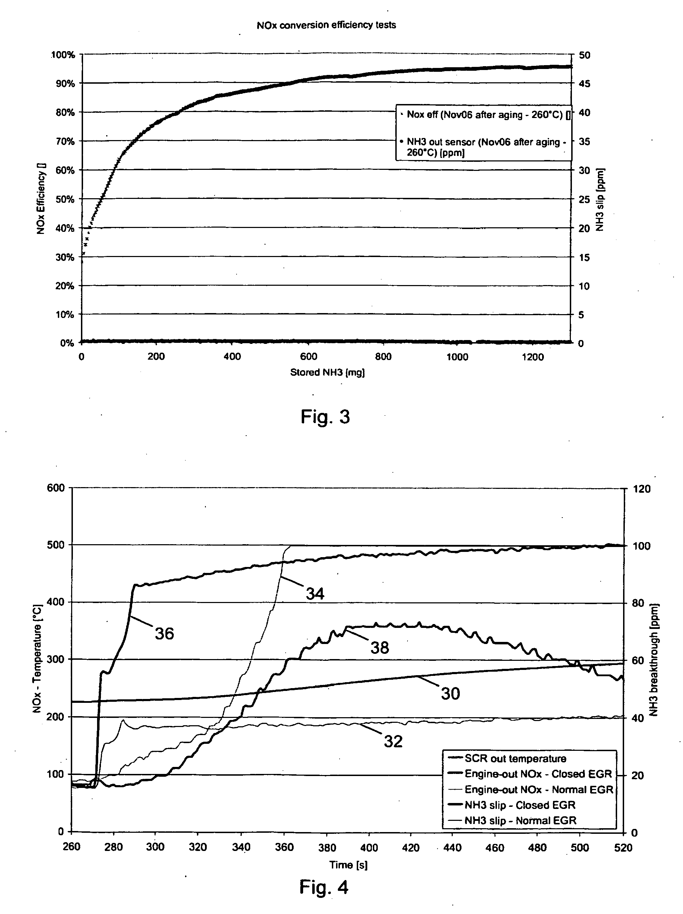

The NOₓ efficiency target model 18 generates a target value for stored NH₃, NOₓ conversion efficiency being dependent on stored NH₃ in the SCR catalyst, based on the required NOₓ efficiency and the SCR temperature. The target NOₓ efficiency is then corrected for other conditions including engine speed, engine load, air temperature, coolant temperature, and Diesel Particulate Filter (DPF) regeneration mode, if appropriate to the system. An example of NOₓ efficiency with respect to stored NH₃ is shown in Fig. 3.

The target stored NH₃ value from the NOₓ efficiency target model 18 is then compared to the calculated stored NH₃ value to generate a stored NH₃ differential 22, which is the difference between what stored NH₃ currently is and where it requires to be (target stored NH₃).

The urea injection control 20 has, as its inputs, the stored NH₃ differential 22 and an exhaust gas temperature value, measured directly from the exhaust gas. Based on the NH₃ differential 22 a urea injection amount is calculated, in this case, using a proportional gain controller, to bring the calculated stored NH₃ value to the target stored NH₃ value. To account for oxidation of NH₃ at high temperature and/or lack of urea hydrolysis at low temperature, the amount of injected urea is modified by a map function of exhaust gas temperature.

When NH₃ slip occurs, the amount of NH₃ leaving the SCR can be reduced by increasing the rate of NH₃ consumption in the SCR. To achieve this, an increase in NOₓ flow in the SCR is required, as the NH₃ reacts with NOₓ. In this example, and as shown in Fig. 4, an increase in NOₓ flow is achieved by turning off EGR. SCR temperature 30 is shown increasing around 200°C to around 300°C. If no action is taken, that is EGR is left as normal, NOₓ emissions 32, from the engine, stays at around 40 ppm (parts per million) but NH₃ slip 34 increases dramatically to more than 100ppm, which is the saturation of the sensor used. Conversely, if EGR is turned off, NOₓ emissions 36 from the engine increase to around 100ppm but NH₃ slip 38 peaks at about 70ppm before reducing. It should be noted that NOₓ emissions 32, 36 are from the engine and not vented from the exhaust. NH₃ slip is caused by having too much NH₃ in the SCR catalyst with respect to NOₓ and, therefore, the NOₓ conversion efficiency will be as high as is possible.

Additionally, the urea injection can be shut-off to reduce the amount of NH₃ in the SCR catalyst. These actions are taken when the NH₃ slip, either computed by the SCR model 16 or measured by a NH₃ sensor, goes above a pre-determined threshold.

As indicated above, an important factor of the SCR model 16 is the stored NH₃ mass. This calculation of the amount of stored NH₃ can be, or certainly become, inaccurate for a number of reasons during implementation in a real world system. For example, as the SCR catalyst ages, its capacity and efficiency can decrease over time causing an error in the estimation of stored NH₃. Furthermore, if the engine produces a different level of NOₓ than modelled due to engine to engine variations or aging of the engine or the urea flow is different than expected, again, an error in the estimation of stored NH₃ can occur.

An accurate physical modelling of the NH₃ slip of the catalyst is too complicated to be implemented and calibrated in an ECU (Engine Control Unit), as it would involve a complex chemical model. The SCR model 16 is an average estimator of the NH₃ slip. The transient behaviour of the SCR model 16 is not accurate because an SCR catalyst's capacity for storing NH₃ is directly linked to a temperature which is supposed to be constant over the length of the SCR catalyst. But the average NH₃ mass predicted by the SCR model 16 can be compared to the average NH₃ mass seen by a NH₃ sensor downstream of the SCR catalyst in the exhaust system.

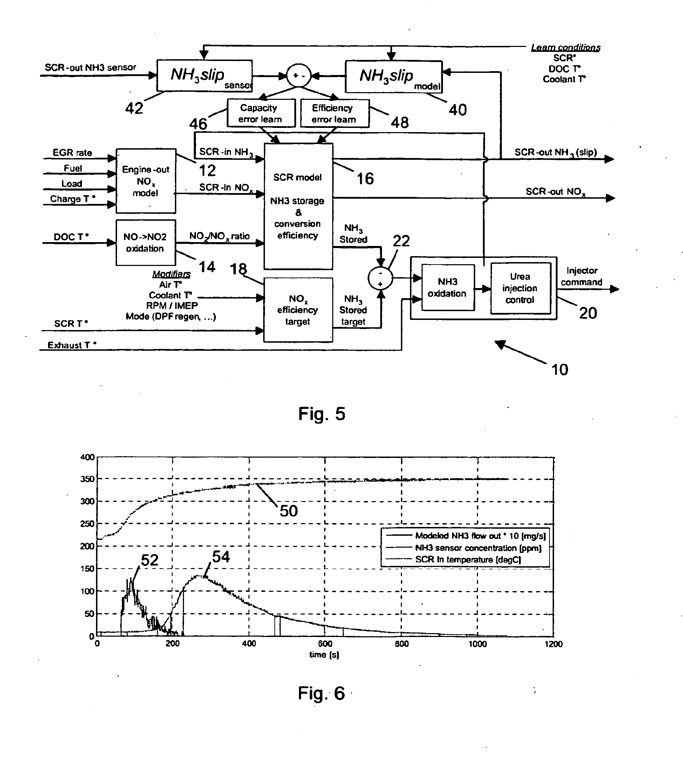

Accordingly, referring to Fig. 5, a NH₃ slip model 40 and a NH₃ slip sensor 42 compare the NH₃ slip from the model and the sensor respectively. A NH₃ slip error 44 is then generated before being passes to a capacity error 46 means and an efficiency error means 48.

Under special conditions, where the model is known to have the best precision, including a high enough DOC temperature and SCR temperature within a predetermined range, the NH₃ slip out of the SCR model 16 and the NH₃ flow seen by the NH₃ sensor are monitored over a fixed time. Once the time has elapsed, both values should be equal if the SCR model 16 is accurate.

Referring to Fig. 6, SCR inlet temperature 50 is shown increasing from around 200C to 350C during a temperature transient. NH₃ slip modelled value 52 and NH₃ slip sensor value 54 both show an increase in NH₃ slip as a result, although there is time lag associated with the NH₃ slip sensor value 54.

If the monitoring period is long enough, transient errors can be neglected and after a pre-determined time, if an error remains between the modelled and sensed NH₃ slip, the SCR model 16 can be altered accordingly.

According to various factors associated with the SCR model 16 the capacity of the SCR catalyst has to be corrected or the efficiency of the NOₓ conversion modified. A capacity correction is made if the SCR catalyst is filled with NH₃ by a pre-determined minimum amount for a predetermined time. Otherwise, it performs a modification to the efficiency of the NOₓ conversion. The modification to the efficiency of the NOₓ conversion can also correct the engine-out NOₓ model in case this input parameter is wrong. A modification to the pre-determined efficiency of the NOₓ conversion acts as a global modifier as it corrects SCR efficiency, injector error, NOₓ flow model error and urea quality. As the target capacity of the SCR catalyst may be set quite low to avoid NH₃ slip during normal operation, the conditions required for a capacity correction may never occur. As such, it can be beneficial to increase the NH₃ stored target so that a capacity correction can occur ( and the SCR catalyst is filled to its maximum capacity). An efficiency modification occurs more often because, as mentioned previously, certain conditions are required for a capacity correction.

Further modifications and improvements may be made without departing from the scope of the present invention.

## Claims

1. A selective catalytic reduction (SCR) catalyst control system (10) for an engine having an SCR catalyst comprising:
a nitrogen oxides (NOₓ) engine emission determination means (12) for determining a NOₓ engine emission value;
a urea control means (20) enabled to supply a quantity of urea to the SCR catalyst;
a NOₓ efficiency target means (18), which determines a stored ammonia (NH₃) target value in the SCR catalyst based on a target conversion NOₓ efficiency and an SCR catalyst temperature, determined from an SCR catalyst temperature determination means ;
an SCR catalyst model (16) which determines a stored NH₃value in the SCR catalyst based on the NOₓ engine emission value, the SCR catalyst temperature, the quantity of urea supplied to the SCR catalyst and a pre-determined efficiency of conversion of NOₓ gases; and
chacterised by a NOₓ ratio calculation means (14) which determines a NOₓ ratio, being the ratio of nitrogen dioxide in the NOₓ engine emission value, and wherein the SCR catalyst model (16) takes into account the NOₓ ratio when determining the stored NH₃ value,
differential determination means enabled to compare the stored NH₃ target value and the stored NH₃ value in the SCR catalyst to determine a stored NH₃ differential,
wherein the urea control means determines the required quantity of urea to supply to the SCR catalyst based on the stored NH₃ differential.

2. A system (10) as claimed in claim 1, wherein the NOₓ ratio calculation means (14) receives a first temperature value from a first temperature sensor and the NOₓ ratio is calculated according to the first temperature value.

3. A system (10) as claimed in claim 2, wherein the first temperature sensor measures the oxidation catalyst temperature.

4. A system (10) as claimed in claim 2, wherein the first temperature sensor measures a particulate filter temperature.

5. A system (10) as claimed in claim 2, wherein the first temperature sensor measures the first temperature value between the particulate filter and the oxidation catalyst.

6. A system (10) as claimed in any of claims 1 to 5, wherein the NOₓ engine emission determination (12) means is an engine-out NOₓ model.

7. A system (16) as claimed in claim 6, wherein the engine-out NOₓ model (12) calculates the NOₓ engine emission value based on injected fuel flow into the engine, engine load, Exhaust Gas Recirculation (EGR) rate and ambient temperature.

8. A system (10) as claimed in any of claims 1 to 5, wherein the NOₓ engine emission determination (12) means is a NOₓ sensor positioned upstream of the SCR catalyst, which provides a NOₓ engine emission value.

9. A system (10) as claimed in any of claims 1 to 8, wherein the NOₓ efficiency target means (18) further utilises values from sensors measuring one or more of the following parameters to determine a target value of stored ammonia (NH₃) in the SCR catalyst: engine speed; engine load; air temperature; coolant temperature; or Diesel Particulate Filter (DPF) regeneration mode.

10. A system as claimed in any of claims 1 to 9, wherein the SCR model (16) determines a NH₃ slip value, which represents the amount of NH₃ exiting the SCR catalyst, by calculating an SCR catalyst capacity based on physical characteristics of the SCR catalyst and the SCR catalyst temperature and taking into account the value of stored NH₃ in the SCR catalyst.

11. A system as claimed in any of claims 1 to 10, further comprising NH₃ slip control means and a NOₓ engine emission increasing means, wherein, if it is determined that the NH₃ slip value is above, or is predicted to rise above, a pre-determined value, NOₓ engine emission increasing means is directed to increase NOₓ engine emissions, thereby reducing NH₃ slip.

12. A system as claimed in claim 11, wherein the NOₓ engine emission increasing means is a Exhaust Gas Recirculation (EGR) means, wherein NOₓ engine emissions are increased by reducing or stopping the amount of EGR to the engine.

13. A system as claimed in any of claims 1 to 12, wherein the system further comprises an SCR model modification means (40, 42, 46, 48).

14. A system as claimed in claim 13, wherein the SCR model modification means comprises a NH₃ sensor (42) enabled to measure actual NH₃ slip from the SCR catalyst, actual NH₃ slip averaging means and SCR model NH₃ slip value averaging means, and comparison means enabled to compare outputs from the actual NH₃ slip averaging means and the SCR model NH₃ slip value averaging means and determine an NH₃ slip estimation error (46, 48), wherein the SCR model is modified by the SCR model modification means according to the NH₃ slip estimation error,

15. A system as claimed in claims 13 or 14, wherein the SCR model modification means is enabled to modify the SCR model by altering the pre-determined efficiency of conversion of NOₓ gases based on the NH₃ slip estimation error (46, 48).

16. A system as claimed in any of claims 13 to 15, wherein the SCR model modification means is enabled to modify the SCR model by altering the SCR catalyst capacity (46) based on the NH₃ slip estimation error.

17. A system as claimed in claim 16, wherein the SCR model modification means modifies the SCR model by altering the SCR catalyst capacity if the SCR catalyst is filled with NH₃ by a pre-determined minimum amount for a predetermined time.

18. A method of controlling selective catalytic reduction (SCR) in an engine having an SCR catalyst comprising the steps of:
(i) determining a nitrogen oxides (NOₓ) engine emission value;
(ii) controlling supply of a quantity of urea to the SCR catalyst;
(iii) measuring an SCR catalyst temperature from the SCR catalyst
(iv) determining a stored ammonia (NH₃) target value in the SCR catalyst based on a target NOₓ conversion efficiency and the SCR catalyst temperature;
(v) calculating a NOₓ ratio, being the ratio of nitrogen dioxide in the NOₓ engine emission value;
(vi) calculating a stored NH₃ value in the SCR catalyst using an SCR catalyst model based on the NOₓ engine emission value, the SCR catalyst temperature, the quantity of urea supplied to the SCR catalyst, the NOx ratio and a pre-determined efficiency of conversion of NOₓ gases; and
(vii) comparing the target value of stored NH₃ and the value of stored NH₃ in the SCR catalyst to determine a stored NH₃ differential,
wherein step (ii) controls the supply of the required quantity of urea to the SCR catalyst based on the stored NH₃ differential.

19. A method as claimed in claim 18, wherein the step of calculating a NOₓ ratio comprises measuring a first temperature value from a first temperature sensor and calculating the NOₓ ratio according to the first temperature value.

20. A method as claimed in claim 19, wherein the first temperature value is an oxidation catalyst temperature value.

21. A method as claimed in claim 19, wherein the first temperature value is a particulate filter temperature.

22. A method as claimed in claim 19, wherein the first temperature value is measured between a particulate filter and an oxidation catalyst.

23. A method as claimed in any of claims 18 to 22, wherein step (i) comprises calculating the (NOₓ) engine emission value based on an engine-out NOₓ model.

24. A method as claimed in claim 23, wherein the step of calculating the (NOₓ) engine emission value takes injected fuel flow into the engine, engine load, Exhaust Gas Recirculation (EGR) rate and ambient temperature into account in the engine-out NOₓ model.

25. A method as claimed in any of claims 18 to 22, wherein step (i) comprises measuring a NOₓ engine emission value from a NOₓ sensor positioned upstream of the SCR catalyst.

26. A method as claimed in any of claims 18 to 25, wherein step (iv) further comprises measuring one or more of the following parameters to determine a target value of stored ammonia (NH₃) in the SCR catalyst:
engine speed; engine load; air temperature; coolant temperature; or Diesel Particulate Filter (DPF) regeneration mode.

27. A method as claimed in any of claims 18 to 26, wherein step (v) further comprises determining an NH₃ slip value, which represents the amount of NH₃ exiting the SCR catalyst, by calculating, within the SCR model, an SCR catalyst capacity based on physical characteristics of the SCR catalyst and the SCR catalyst temperature and taking into account the value of stored NH₃ in the SCR catalyst.

28. A method as claimed in any of claims 18 to 27, further comprising the steps of controlling NH₃ slip and increasing NOₓ engine emissions,
wherein, if it is determined that the NH₃ slip value is above, or is predicted to rise above, a pre-determined value, NOₓ engine emissions are increased, thereby reducing NH₃ slip.

29. A method as claimed in claim 28, wherein the step of increasing NOₓ engine emissions comprises reducing or stopping the amount of Exhaust Gas Recirculation (EGR) to the engine.

30. A method as claimed in any of claims 18 to 29, further comprising the step of modifying the SCR model used in step (vi).

31. A method as claimed in claim 30, wherein the step of modifying the SCR model comprises measuring actual NH₃ slip from the SCR catalyst using an NH₃ sensor, calculating the SCR model NH₃ slip from the SCR model, averaging the actual NH₃ slip over a pre-determined time and averaging SCR model NH₃ slip over the same pre-determined time, comparing the averaged actual NH₃ slip and the averaged SCR model NH₃ slip and determining an NH₃ slip estimation error, wherein the SCR model is subsequently modified according to the NH₃ slip estimation error.

32. A method as claimed in claim 31, wherein the step of modifying the SCR model modifies the SCR model by altering the pre-determined efficiency of conversion of NOₓ gases based on the NH₃ slip estimation error.

33. A method as claimed in claim 30 or claim 31, wherein the step of modifying the SCR model modifies the SCR model by altering the SCR catalyst capacity based on the NH₃ slip estimation error.

34. A method as claimed in claim 33, wherein the step of modifying the SCR model modifies the SCR model by altering the SCR catalyst capacity if the SCR catalyst is filled with NH₃ by a pre-determined minimum amount for a predetermined time.

35. A Diesel engine incorporating a selective catalytic reduction (SCR) catalyst control system according claims 1 to 17.

## Patentansprüche

1. "Selektive katalytische Reduktion (SCR - selective catalytic reduction)"-Katalysatorsteuerungssystem (10) für einen Motor mit einem SCR-Katalysator, das aufweist:
ein Stickstoffoxid(NOₓ)-Motoremissionsbestimmungsmittel (12) zum Bestimmen eines NOₓ-Motoremissionswerts;
ein Harnstoff Steuerungsmittel (20), das eine Menge von Harnstoff an den SCR-Katalysator liefern kann;
ein NOₓ-Effizienzzielmittel (18), das einen Zielwert für gespeichertes Ammoniak (NH₃) in dem SCR-Katalysator bestimmt basierend auf einer Ziel-Umwandlungs-NOₓ-Effizienz und einer SCR-Katalysator-Temperatur, bestimmt aus einem SCR-Katalysator-Temperatur-Bestimmungs-Mittel;
ein SCR-Katalysator-Modell (16), das einen Wert für gespeichertes NH₃ in dem SCR-Katalysator bestimmt basierend auf dem NOₓ-Motoremissionswert, der SCR-Katalysator-Temperatur, der an den SCR-Katalysator gelieferten Menge von Harnstoff, und einer vorgegebenen Effizienz einer Umwandlung von NOₓ-Gasen; und
**gekennzeichnet durch** ein NOₓ-Verhältnis-Berechnungsmittel (14), das ein NOₓ-Verhältnis bestimmt, welches das Verhältnis von Stickstoffdioxid in dem NOₓ-Motoremissionswert ist, und wobei das SCR-Katalysator-Modell (16) das NOₓ-Verhältnis berücksichtigt bei einer Bestimmung des Werts für gespeichertes NH₃,
Differential-Bestimmungsmittel, die bereit sind, den Zielwert für gespeichertes NH₃ und den Wert für gespeichertes NH₃ in dem SCR-Katalysator zu vergleichen, um ein Differential für gespeichertes NH₃ zu bestimmen,
wobei das Harnstoff-Steuerungsmittel die erforderliche Menge von Harnstoff zur Lieferung an den SCR-Katalysator bestimmt basierend auf dem Differential für gespeichertes NH₃.

2. System (10) gemäß Anspruch 1, wobei das NOₓ-Verhältnis-Berechnungsmittel (14) einen ersten Temperaturwert von einem ersten Temperatursensor empfängt und das NOₓ-Verhältnis gemäß dem ersten Temperaturwert berechnet wird.

3. System (10) gemäß Anspruch 2, wobei der erste Temperatursensor die Oxidationskatalysatortemperatur misst.

4. System (10) gemäß Anspruch 2, wobei der erste Temperatursensor eine Partikelfiltertemperatur misst.

5. System (10) gemäß Anspruch 2, wobei der erste Temperatursensor den ersten Temperaturwert zwischen dem Partikelfilter und dem Oxidationskatalysator misst.

6. System (10) gemäß einem der Ansprüche 1 bis 5, wobei das NOₓ-Motoremissions-Bestimmungsmittel (12) ein Emissions-NOₓ-Modell ist.

7. System (16) gemäß Anspruch 6, wobei das Emissions-NOₓ-Modell (12) den NOₓ-Motoremissionswert berechnet basierend auf einer eingespritzten Kraftstoffzufuhr in den Motor, einer Motorlast, einer Abgasrückführungs(EGR - Exhaust Gas Recirculation)-Rate und einer Umgebungstemperatur.

8. System (10) gemäß einem der Ansprüche 1 bis 5, wobei das NOₓ-Motoremission-Bestimmungsmittel (12) ein NOₓ-**Sensor ist, der** stromaufwärts von dem SCR-Katalysator positioniert ist, der einen NOₓ-Motoremissionswert liefert.

9. System (10) gemäß einem der Ansprüche 1 bis 8, wobei das NOₓ-Effizienzzielmittel (18) weiter Werte von Sensoren benutzt, die einen oder mehrere der folgenden Parameter messen, um einen Zielwert von gespeichertem Ammoniak (NH₃) in dem SCR-Katalysator zu bestimmen:
Motorgeschwindigkeit; Motorlast; Lufttemperatur; Kühlmitteltemperatur; **oder Diesel**partikelfilter(DPF - Diesel Particulate Filter)-Regenerationsmodus.

10. System (10) gemäß einem der Ansprüche 1 bis 9, wobei das SCR-Modell (16) einen NH₃-Schlupfwert bestimmt, der die Menge von NH₃ repräsentiert, das den SCR-Katalysator verlässt, durch Berechnen einer SCR-Katalysator-Kapazität basierend auf physikalischen Eigenschaften des SCR-Katalysators und der SCR-Katalysator-Temperatur und unter Berücksichtigung des Werts von gespeichertem NH₃ in dem SCR-Katalysator.

11. System gemäß einem der Ansprüche 1 bis 10, das weiter aufweist NH₃-Schlupfsteuerung und ein NOₓ-Motoremissionserhöhungsmittel, wobei, wenn bestimmt wird, dass der NH₃-Schlupfwert über einem vorgegebenen Wert liegt oder über diesen steigen wird, das NOₓ-Motoremissionserhöhungsmittel angewiesen wird, NOₓ-Motoremissionen zu erhöhen, wodurch ein NH₃-Schlupf reduziert wird.

12. System gemäß Anspruch 11, wobei das NOₓ-Motoremissionserhöhungsmittel ein Abgasrückführungs(EGR - Exhaust Gas Recirculation)-Mittel ist, wobei NOₓ-Motoremissionen erhöht werden durch Reduzieren oder Stoppen der Menge von EGR an den Motor.

13. System gemäß einem der Ansprüche 1 bis 12, wobei das System weiter ein SCR-Modell-Modifikationsmittel (40, 42, 46, 48) aufweist.

14. System (10) gemäß Anspruch 13, wobei das SCR-Modell-Modifikationsmittel einen NH₃-Sensor (42) aufweist, der bereit ist, einen tatsächlichen NH₃-Schlupf von dem SCR-Katalysator zu messen, tatsächlicher NH₃-Schlupf-Mittelungsmittel und SCR-Modell-NH₃-Schlupfwert-Mittelungsmittel, und Vergleichsmittel, die bereit sind, Ausgaben von dem tatsächlicher NH₃-Schlupf-Mittelungsmittel und dem SCR-Modell-NH₃-Schlupfwert-Mittelungsmitteln zu vergleichen und einen NH₃-Schlupfschätzfehler (46, 48) zu bestimmen, wobei das SCR-Modell durch das SCR-Modell-Modifikationsmittel gemäß dem NH₃-Schlupfschätzfehler modifiziert wird.

15. **System gemäß Anspruch 13 oder 14**, wobei das SCR-Modell-Modifikationsmittel bereit ist, das SCR-Modell zu modifizieren durch Ändern der vorgegebenen Umwandlungseffizienz von NOₓ-Gasen basierend auf dem NH₃-Schlupfschätzfehler (46, 48).

16. System gemäß einem der Ansprüche 13 bis 15, wobei das SCR-Modell-Modifikationsmittel bereit ist, das SCR-Modell zu modifizieren durch Ändern der SCR-Katalysator-Kapazität (46) basierend auf dem NH₃-Schlupfschätzfehler.

17. System gemäß Anspruch 16, wobei das SCR-Modell-Modifikationsmittel das SCR-Modell modifiziert durch Ändern der SCR-Katalysator-Kapazität, wenn der SCR-Katalysator mit NH₃ gefüllt ist um eine vorgegebene minimale Menge für eine vorgegebene Zeitdauer.

18. Verfahren zum Steuern einer selektiven katalytischen Reduktion (SCR - selective catalytic reduction) in einem Motor mit einem SCR-Katalysator, das die Schritte aufweist:
(i) Bestimmen eines Stickstoffoxid(NOₓ)-Motoremissionswerts;
(ii) Steuern einer Lieferung einer Menge von Harnstoff an den SCR-Katalysator;
(iii) Messen einer SCR-Katalysator-Temperatur aus dem SCR-Katalysator;
(iv) Bestimmen eines Zielwerts für gespeichertes Ammoniak (NH₃) in dem SCR-Katalysator basierend auf einer Ziel-NOₓ-Umwandlungseffizienz und der SCR-Katalysator-Temperatur;
(v) Berechnen eines NOₓ-Verhältnisses, welches das Verhältnis von Stickstoffdioxid in dem NOₓ-Motoremissionswert ist;
(vi) Berechnen eines Werts für gespeichertes NH₃ in dem SCR-Katalysator unter Verwendung eines SCR-Katalysator-Modells basierend auf dem NOₓ-Motoremissionswert, der SCR-Katalysator-Temperatur, der Menge von Harnstoff, die an den SCR-Katalysator geliefert wird, des NOₓ-Verhältnisses und einer vorgegebenen Umwandlungseffizienz von NOₓ-Gasen; und
(vii) Vergleichen des Zielwerts des gespeicherten NH₃ und des Werts von gespeicherten NH₃ in dem SCR-Katalysator, um ein Differential für gespeichertes NH₃ zu bestimmen,
wobei der Schritt (ii) die erforderliche Menge von Harnstoff zur Lieferung an den SCR-Katalysator bestimmt basierend auf dem Differential für gespeichertes NH₃.

19. Verfahren gemäß Anspruch 18, wobei der Schritt des Berechnens eines NOₓ-Verhältnisses aufweist ein Messen eines ersten Temperaturwerts von einem ersten Temperatursensor und ein Berechnen des NOₓ-Verhältnisses gemäß dem ersten Temperaturwert.

20. Verfahren gemäß Anspruch 19, wobei der erste Temperaturwert ein Oxidationskatalysatortemperaturwert ist.

21. Verfahren gemäß Anspruch 19, wobei der erste Temperaturwert eine Partikelfiltertemperatur ist.

22. Verfahren gemäß Anspruch 19, wobei der erste Temperaturwert zwischen einem Partikelfilter und einem Oxidationskatalysator gemessen wird.

23. Verfahren gemäß einem der Ansprüche 18 bis 22, wobei Schritt (i) aufweist ein Berechnen des NOₓ-Motoremissionswerts basierend auf einem Emissions-NOₓ-Modell.

24. Verfahren gemäß Anspruch 23, wobei der Schritt des Berechnens des NOₓ-Motoremissionswerts eine eingespritzte Kraftstoffzufuhr in den Motor, eine Motorlast, eine Abgasrückführungs(EGR - Exhaust Gas Recirculation)-Rate und eine Umgebungstemperatur in dem Emissions-NOₓ-Modell berücksichtigt.

25. Verfahren gemäß einem der Ansprüche 18 bis 22, wobei Schritt (i) aufweist ein Messen eines NOₓ-Motoremissionswerts von einem NOₓ-Sensor, der stromaufwärts von dem SCR-Katalysator positioniert ist.

26. Verfahren gemäß einem der Ansprüche 18 bis 25, wobei Schritt (ii) weiter aufweist ein Messen eines oder mehrere der folgenden Parameter, um einen Zielwert von gespeichertem Ammoniak (NH₃) in dem SCR-Katalysator zu bestimmen: Motorgeschwindigkeit; Motorlast; Lufttemperatur; Kühlmitteltemperatur; oder Dieselpartikelfilter(DPF - Diesel Particulate Filter)-Regenerationsmodus.

27. Verfahren gemäß einem der Ansprüche 18 bis 26, wobei Schritt (v) weiter aufweist Bestimmen eines NH₃-Schlupfwerts, der die Menge von NH₃ repräsentiert, das den SCR-Katalysator verlässt, durch Berechnen, in dem SCR-Modell, einer SCR-Katalysator-Kapazität basierend auf physikalischen Eigenschaften des SCR-Katalysators und der SCR-Katalysator-Temperatur und unter Berücksichtigung des Werts von gespeichertem NH₃ in dem SCR-Katalysator.

28. Verfahren gemäß einem der Ansprüche 18 bis 27, das weiter aufweist die Schritte eines Steuerns von NH₃-Schlupf und ein Erhöhen von NOₓ-Motoremissionen, wobei, wenn bestimmt wird, dass der NH₃-Schlupfwert über einem vorgegebenen Wert liegt oder über diesen steigen wird, NOₓ-Motoremissionen erhöht werden, wodurch ein NH₃-Schlupf reduziert wird.

29. Verfahren gemäß Anspruch 28, wobei der Schritt des Erhöhens von NOₓ-Motoremissionen aufweist ein Reduzieren oder Stoppen der Menge von Abgasrückführung (EGR - Exhaust Gas Recirculation) an den Motor.

30. Verfahren gemäß einem der Ansprüche 18 bis 29, das weiter den Schritt eines Modifizierens des in Schritt (vi) benutzten SCR-Modells aufweist.

31. Verfahren gemäß Anspruch 30, wobei der Schritt des Modifizieren des SCR-Modells aufweist ein Messen eines tatsächlichen NH₃-Schlupfs von dem SCR-Katalysator unter Verwendung eines NH₃-Sensors, Berechnen des SCR-Modell-NH₃-Schlupfs von dem SCR-Modell, Mitteln des tatsächlichen NH₃-Schlupfs über eine vorgegebene Zeitdauer und Mitteln des SCR-Modell-NH₃-Schlupfs über dieselbe vorgegebene Zeitdauer, Vergleichen des gemittelten tatsächlichen NH₃-Schlupfs und des gemittelten SCR-Modell-NH₃-Schlupfs und Bestimmen eines NH₃-Schlupfschätzfehlers,
wobei das SCR-Modell nachfolgend gemäß dem NH₃-Schlupfschätzfehler modifiziert wird.

32. Verfahren gemäß Anspruch 31, wobei der Schritt des Modifizierens des SCR-Modells das SCR-Modell modifiziert durch Ändern der vorgegebenen Umwandlungseffizienz von NOₓ-Gasen basierend auf dem NH₃-Schlupfschätzfehler.

33. Verfahren gemäß Anspruch 30 oder Anspruch 31, wobei der Schritt des Modifizierens des SCR-Modells das SCR-Modell modifiziert durch Ändern der SCR-Katalysator-Kapazität basierend auf dem NH₃-Schlupfschätzfehler.

34. Verfahren gemäß Anspruch 33, wobei der Schritt des Modifizierens des SCR-Modells das SCR-Modell modifiziert durch Ändern der SCR-Katalysator-Kapazität, wenn der SCR-Katalysator mit NH₃ gefüllt ist um eine vorgegebene minimale Menge für eine vorgegebene Zeitdauer.

35. Dieselmotor, der ein "selektive katalytische Reduktion (SCR - selective catalytic reduction)"- Katalysatorsteuerungssystem gemäß den Ansprüchen 1 bis 17 umfasst.

## Revendications

1. Système de contrôle de catalyseur (10) à réduction catalytique sélective ("Selective Catalytic Reduction") pour un moteur ayant un catalyseur SCR, comprenant :
un moyen de détermination (12) des émissions d'oxydes d'azote (NOx) du moteur pour déterminer une valeur d'émission NOx du moteur ;
un moyen de commande d'urée (20) dont la fonction est de fournir une quantité d'urée au catalyseur SCR ;
un moyen formant cible d'efficacité NOx (18), qui détermine une valeur cible d'ammoniaque stockée (NH₃) dans le catalyseur SCR en se basant sur une efficacité de conversion cible NOx et sur une température du catalyseur SCR, déterminée par un moyen de détermination de température du catalyseur SCR ;
un modèle de catalyseur SCR (16) qui détermine une valeur de NH₃ stockée dans le catalyseur SCR en se basant sur la valeur d'émission NOx du moteur, sur la température du catalyseur SCR, sur la quantité d'urée fournie au catalyseur SCR, et sur une efficacité prédéterminée de la conversion des gaz NOx ; et
**caractérisé par** un moyen de calcul de rapport NOx (14) qui détermine un rapport NOx, qui est le rapport de dioxyde d'azote dans la valeur d'émission NOx du moteur, et dans lequel le modèle de catalyseur SCR (16) tient compte du rapport NOx lorsqu'il détermine la valeur de NH₃ stockée,
un moyen de détermination de différentielle dont la fonction est de comparer la valeur cible NH₃ stockée et la valeur NH₃ stockée dans le catalyseur SCR pour déterminer une différentielle de NH₃ stockée, et dans lequel le moyen de commande d'urée détermine la quantité requise d'urée à fournir au catalyseur SCR en se basant sur la différentielle NH₃ stockée.

2. Système (10) selon la revendication 1, dans lequel le moyen de calcul de rapport NOx (14) reçoit une première valeur de température depuis un premier capteur de température, et le rapport NOx est calculé selon la première valeur de température.

3. Système (10) selon la revendication 2, dans lequel le premier capteur de température mesure la température du catalyseur d'oxydation.

4. Système (10) selon la revendication 2, dans lequel le premier capteur de température mesure une température d'un filtre à particules.

5. Système (10) selon la revendication 2, dans lequel le premier capteur de température mesure la première valeur de température entre le filtre à particules et le catalyseur d'oxydation.

6. Système (10) selon l'une quelconque des revendications 1 à 5, dans lequel le moyen de détermination (12) des émissions NOx du moteur est un modèle de NOx sortant du moteur ("engine-out").

7. Système (10) selon la revendication 6, dans lequel le modèle (12) de NOx sortant du moteur calcule la valeur des émissions NOx du moteur en se basant sur le débit de carburant injecté dans le moteur, sur la charge du moteur, sur le taux de recyclage des gaz d'échappement ("Exhaust Gas Recirculation") et sur la température ambiante.

8. Système (10) selon l'une quelconque des revendications 1 à 5, dans lequel le moyen de détermination (12) des émissions NOx du moteur est un capteur NOx positionné en amont du catalyseur SCR, qui fournit une valeur pour les émissions NOx du moteur.

9. Système (10) selon l'une quelconque des revendications 1 à 8, dans lequel le moyen formant cible d'efficacité NOx (18) utilise en outre des valeurs provenant de capteurs qui mesurent un ou plusieurs des paramètres suivants pour déterminer une valeur cible de l'ammoniaque stockée (NH₃) dans le catalyseur SCR : vitesse moteur ; charge moteur ; température de l'air ; température du fluide refroidissement ; ou mode de régénération du filtre à particules diesel (DPF).

10. Système selon l'une quelconque des revendications 1 à 9, dans lequel le modèle SCR (16) détermine une valeur de dérive de NH₃, qui représente la quantité de NH₃ sortant du catalyseur SCR, en calculant une capacité de catalyseur SCR en se basant sur des caractéristiques physiques du catalyseur SCR et sur la température du catalyseur SCR, et en tenant compte de la valeur de NH₃ stockée dans le catalyseur SCR.

11. Système selon l'une quelconque des revendications 1 à 10, comprenant en outre un moyen de commande de dérive de NH₃, et un moyen d'augmentation des émissions NOx du moteur, dans lequel, lorsqu'on détermine que la valeur de dérive de NH₃ est supérieure à, ou qu'il est prévisible que le cette valeur devienne supérieure à, une valeur prédéterminée, le moyen d'augmentation des émissions NOx du moteur est piloté pour augmenter les émissions NOx du moteur, en réduisant ainsi la dérive de NH₃.

12. Système selon la revendication 11, dans lequel le moyen d'augmentation des émissions NOx du moteur est un moyen à recirculation de gaz d'échappement (EGR), dans lequel les émissions NOx du moteur sont augmentées en réduisant ou en arrêtant la quantité de gaz d'échappement recyclée vers le moteur.

13. Système selon l'une quelconque des revendications 1 à 12, dans lequel le système comprend en outre un moyen de modification de modèle SCR (40, 42, 46, 48).

14. Système selon la revendication 13, dans lequel le moyen de modification de modèle SCR comprennent un capteur de NH₃ (42) dont la fonction est de mesurer une dérive actuelle de NH₃ à partir du catalyseur SCR, d'un moyen formant une moyenne de la dérive actuelle de NH₃, et d'un moyen formant une moyenne de la valeur de dérive de NH₃ dans le modèle SCR, et d'un moyen de comparaison dont la fonction est de comparer les sorties provenant du moyen formant une moyenne de la dérive actuelle de NH₃ et du moyen formant une moyenne de la valeur de dérive de NH₃ dans le modèle SCR, et de déterminer une erreur d'estimation (46, 48) sur la dérive NH₃, dans lequel le modèle SCR est modifié par le moyen de modification de modèle SCR en accord avec l'erreur d'estimation sur la dérive de NH₃.

15. Système selon les revendications 13 ou 14, dans lequel le moyen de modification de modèle SCR a pour fonction de modifier le modèle SCR en modifiant l'efficacité prédéterminée de conversion des gaz NOx en se basant sur l'erreur d'estimation (46, 48) de la dérive de NH₃.

16. Système selon l'une quelconque des revendications 13 à 15, dans lequel le moyen de modification de modèle SCR a pour fonction de modifier le modèle SCR en modifiant la capacité de catalyseur SCR (46) en se basant sur l'erreur d'estimation de la dérive NH₃.

17. Système selon la revendication 16, dans lequel le moyen de modification de modèle SCR modifie le modèle SCR en faisant varier la capacité du catalyseur SCR si le catalyseur SCR est rempli de NH₃ par une quantité minimum prédéterminée pour une durée prédéterminée.

18. Procédé pour contrôler une réduction catalytique sélective (SCR) dans un moteur ayant un catalyseur SCR, comprenant les étapes consistant à :
(i) déterminer la valeur d'émission des oxydes d'azote (NOx) par le moteur ;
(ii) contrôler la fourniture d'une quantité d'urée au catalyseur SCR ;
(iii) mesurer une température du catalyseur SCR à partir du catalyseur SCR ;
(iv) déterminer une valeur cible pour l'ammoniaque stockée (NH₃) dans le catalyseur SCR en se basant sur une efficacité de conversion cible des NOx et sur la température du catalyseur SCR ;
(v) calculer un rapport des NOx, qui est le rapport de dioxyde d'azote dans la valeur d'émission de NOx du moteur ;
(vi) calculer une valeur de NH₃ stockée dans le catalyseur SCR en utilisant un modèle de catalyseur SCR basé sur la valeur d'émission NOx du moteur, sur la température du catalyseur SCR, sur la quantité d'urée fournie au catalyseur SCR, sur le rapport NOx, et sur une efficacité prédéterminée pour la conversion de gaz NOx ; et
(vii) comparer la valeur cible de NH₃ stockée et la valeur de NH₃ stockée dans le catalyseur SCR pour déterminer une différentielle de NH₃ stockée,
dans lequel l'étape (ii) commande l'alimentation de la quantité requise d'urée par le catalyseur SCR en se basant sur la différentielle de NH₃ stockée.

19. Procédé selon la revendication 18, dans lequel l'étape de calcul d'un rapport NOx comprend de mesurer une première valeur de température depuis un premier capteur de température, et de calculer le rapport NOx en accord avec la première valeur de température.

20. Procédé selon la revendication 19, dans lequel la première valeur de température est une valeur de température du catalyseur d'oxydation.

21. Procédé selon la revendication 19, dans lequel la première valeur de température est une température d'un filtre à particules.

22. Procédé selon la revendication 19, dans lequel la première valeur de température est mesurée entre un filtre à particules et un catalyseur d'oxydation.

23. Procédé selon l'une quelconque des revendications de 18 à 22, dans lequel l'étape (i) comprend de calculer la valeur d'émission des (NOx) du moteur en se basant sur un modèle de NOx en sortie du moteur.

24. Procédé selon la revendication 23, dans lequel l'étape de calcul de la valeur d'émission des NOx du moteur prend en compte le débit de carburant injecté dans le moteur, la charge du moteur, le taux de recyclage de gaz d'échappement (EGR) et la température ambiante dans le modèle de NOx en sortie du moteur.

25. Procédé selon l'une quelconque des revendications 18 à 22, dans lequel l'étape (i) comprend de mesurer une valeur des émissions NOx du moteur depuis un capteur de NOx positionné en amont du catalyseur SCR.

26. Procédé selon l'une quelconque des revendications 18 à 25, dans lequel l'étape (iv) comprend en outre de mesurer un ou plusieurs des paramètres suivants pour déterminer une valeur cible de l'ammoniaque stockée (NH₃) dans le catalyseur SCR : vitesse moteur ; charge moteur ; température de l'air ; température du fluide réfrigérant ; ou mode de régénération du filtre à particules diesel (DPF).

27. Procédé selon l'une quelconque des revendications 18 à 26, dans lequel l'étape (v) comprend en outre de déterminer une valeur de dérive de NH₃, qui représente la quantité de NH₃ sortant du catalyseur SCR, en calculant, dans le modèle SCR, une capacité du catalyseur SCR en se basant sur des caractéristiques physiques du catalyseur SCR et sur la température du catalyseur SCR, et en tenant compte de la valeur de NH₃ stockée dans le catalyseur SCR.

28. Procédé selon l'une quelconque des revendications 18 à 27, comprenant en outre les étapes consistant à contrôler la dérive de NH₃ et à augmenter les émissions NOx du moteur, dans lequel, si l'on détermine que la valeur de dérive de NH₃ est supérieure à, ou s'il est prévisible qu'elle devienne supérieure à, une valeur prédéterminée, les émissions NOx du moteur sont augmentées, en réduisant ainsi la dérive de NH₃.

29. **Procédé selon la revendication 28, dans lequel l'étape** d'augmentation des émissions NOx du moteur comprend de réduire ou d'arrêter la quantité de recirculation des gaz d'échappement (EGR) vers le moteur.

30. Procédé selon l'une quelconque des revendications 18 à 29, comprenant en outre l'étape consistant à modifier le modèle SCR utilisé dans l'étape (vi).

31. Procédé selon la revendication 30, dans lequel l'étape consistant à modifier le modèle SCR comprend de mesurer la dérive actuelle de NH₃ provenant du catalyseur SCR en utilisant un capteur de NH₃, de calculer la dérive NH₃ du modèle SCR provenant du modèle SCR, de faire une moyenne de la dérive actuelle de NH₃ sur une période prédéterminée et de faire une moyenne de la dérive NH₃ du modèle SCR sur la même période prédéterminée, de comparer la moyenne de dérive actuelle de NH₃ et la moyenne de la dérive NH₃ du modèle SCR, et de déterminer une erreur d'estimation de dérive de NH₃, et dans lequel le modèle SCR est ultérieurement modifié en accord avec l'erreur d'estimation de dérive NH₃.

32. Procédé selon la revendication 31, dans lequel l'étape consistant à modifier le modèle SCR modifie le modèle SCR en faisant varier l'efficacité prédéterminée de conversion des gaz NOx en se basant sur l'erreur d'estimation de dérive NH₃.

33. Procédé selon la revendication 30 ou 31, dans lesquels l'étape consistant à modifier le modèle SCR modifie le modèle SCR en faisant varier la capacité du catalyseur SCR en se basant sur l'erreur d'estimation de dérive NH₃.

34. Procédé selon la revendication 33, dans lequel l'étape consistant à modifier le modèle SCR modifie le modèle SCR en faisant varier la capacité du catalyseur SCR si le catalyseur SCR est rempli de NH₃ avec une quantité minimum prédéterminée pendant une durée prédéterminée.

35. Moteur diesel incorporant un système de commande de catalyseur à réduction catalytique sélective (SCR) selon les revendications 1 à 17.
